(19) Europäisches Patentamt

European Patent Office

Office européen des brevets

(11) Veröffentlichungsnummer : **0 340 451 B1**

# (12) EUROPÄISCHE PATENTSCHRIFT

(45) Veröffentlichungstag der Patentschrift :
**29.01.92 Patentblatt 92/05**

(21) Anmeldenummer : **89105594.9**

(22) Anmeldetag : **30.03.89**

(51) Int. Cl.⁵ : **F16H 1/445,** B60K 17/34

(30) Priorität : **05.05.88 DE 3815225**
**20.03.89 DE 3909112**

(43) Veröffentlichungstag der Anmeldung :
**08.11.89 Patentblatt 89/45**

(45) Bekanntmachung des Hinweises auf die
Patenterteilung :
**29.01.92 Patentblatt 92/05**

(84) Benannte Vertragsstaaten :
**DE ES FR GB IT SE**

(56) Entgegenhaltungen :
**DE-A- 3 707 115**
**DE-A- 3 733 771**
**US-A- 3 002 401**
**US-A- 3 400 610**

(54) **Ausgleichsgetriebe.**

(73) Patentinhaber : **GKN AUTOMOTIVE**
**AKTIENGESELLSCHAFT**
**Alte Lohmarer Strasse 59**
**W-5200 Siegburg (DE)**

(72) Erfinder : **Botterill, John R., Dr.**
**Weinbergweg 62**
**W-6600 Saarbrücken (DE)**

(74) Vertreter : **Neumann, Ernst Dieter, Dipl.-Ing. et al**
**HARWARDT NEUMANN PATENTANWÄLTE**
**Scheerengasse 2 Postfach 1455**
**W-5200 Siegburg (DE)**

## Beschreibung

Die Erfindung betrifft ein Ausgleichsgetriebe mit extern veränderlich steuerbarer Sperrkupplung, insbesondere für Kraftfahrzeuge, mit einem in einem Gehäuse drehbar gelagerten und antreibbaren Differentialträger, mit diesem koaxial angeordneten und drehbar gekoppelten jeweils mit einer Abtriebswelle drehfest verbindbaren Abtriebsrädern, mit diesen gleichzeitig in Eingriff befindlichen im Differentialträger drehbar gehaltenen Ausgleichsrädern und einer Reibanordnung, die abwechselnd drehfest mit einem ersten der koaxial liegenden Teile — Differentialträger und Abtriebsräder — verbundene Außenlamellen und drehfest mit einem anderen der koaxial liegenden Teile — Differentialträger und Abtriebsräder — verbundene Innenlamellen gegebenenfalls unter Zwischenschaltung frei drehender Zwischenscheiben umfaßt, wobei diese einerseits an einer Stützfläche des ersten der Teile — Differentialträger oder eines der Abtriebsräder — axial abgestützt sind und andererseits über eine Betätigungseinrichtung und eine Druckplatte beaufschlagbar sind.

Es sind bereits extern gesteuert sperrbare Ausgleichsgetriebe bekannt, bei denen die Beaufschlagung der Reibanordnung über Hydraulikzylinder erfolgt. Diese sind in das Ausgleichsgetriebe integriert. Zwar sind solche Betätigungen für sperrbare Ausgleichsgetriebe von der Funktion und dem Verhalten her relativ gut, jedoch wegen der Hydraulikbauteile aufwendig. Dies trifft sogar selbst dann zu, wenn eine Hydraulikanlage beispielsweise für die Servolenkung und die Federung schon vorhanden ist.

Es sind auch schon elektromagnetische Betätigungen für die Beaufschlagung der Reibanordnung eines sperrbaren Ausgleichsgetriebes, gemäß dem Oberbegriff des Anspruchs 1 vorgeschlagen worden (DE-A-3707115). Von Nachteil bei einer solchen Anordnung ist jedoch, daß eine mechanische Übersetzung zwischen der Spule und den Reiblamellen eine akzeptable Sperrwirkung in nur einem schmalen Verschleißbereich der Lamellen ermöglicht. Dies hängt mit der stark abfallenden Betätigungskraft der Spule zusammen, wenn diese gegenüber dem Anker nicht in ihrer optimalen Position verbleibt. Es ist ein anderes Ausgleichsgetriebe vorgeschlagen worden, bei dem eine Reibscheibenanordnung elektromagnetisch betätigt wird (DE-A-3733771). Für die Verwendung als Achsdifferential reicht hierbei die erzielbare Sperrwirkung nicht aus. Die Konstruktion ist für einen Quereinbau zu sperrig. In nachteiliger Weise entstehen Reibwertfluktuationen.

Ausgehend hiervon liegt der Erfindung die Aufgabe zugrunde, ein sperrbares Ausgleichsgetriebe zu schaffen, das über eine Außensteuerung regelbar ist, klein gebaut und kostengünstig herstellbar ist, als die bekannten extern gesteuerten sperrbaren Differentiale.

Diese Aufgabe wird erfindungsgemäß dadurch gelöst, daß die Betätigungseinrichtung einen zum Gehäuse drehfesten, aber axial auf die Reibanordnung zu verschiebbaren Druckring, einen dazu relativ verdrehbaren, axial aber unverschieblich gehaltenen, den Druckring verschiebenden Stellring und einen diesen bedarfsweise antreibenden Drehantrieb umfaßt.

Von Vorteil bei dieser Ausbildung ist, daß Drehantriebe in der Regel kostengünstiger darzustellen sind, als unmittelbar axial wirkende Kraftantriebe, wie z.B. Hydraulikzylinder. Darüber hinaus wird durch den Druckring und den Stellring eine Kraftumlenkung und Übersetzung erreicht, die eine weitere Verkleinerung, also eine Reduzierung des Bauraumes ermöglicht.

Bevorzugt ist in weiterer Ausgestaltung vorgesehen, daß der Drehantrieb ein mindestens einstufiges Untersetzungsgetriebe und einen Motor aufweist. Dabei ist dieser besonders günstig als Elektromotor auszugestalten. Ferner ist durch die Wahl des Elektromotors in besonders günstiger Weise eine Steuerung für die Betätigung erzielbar. Der Elektromotor kann aufgrund der Zwischenschaltung eines Untersetzungsgetriebes zusätzlich von der Baugröße her verringert werden. Die erforderliche Leistung des Motors wird dadurch weiter reduziert, so daß kein negativer Einfluß auf die gesamte Energiesituation im Fahrzeug gegeben ist. Es genügen für eine Ansprechzeit von 150 ms bei einer Untersetzung von 1 : 50 und einem Rampenwinkel von 1,5° Leistungen im Bereich bis circa 250 Watt.

Nach einem weiteren Merkmal der Erfindung ist vorgesehen, zur Bildung des Untersetzungsgetriebe den Stellring an seinem radial äußeren Abschnitt mit einer Verzahnung zu versehen, mit der ein Zahnritzel kämmt. Hierdurch ist es ohne weiteres möglich, den Motor außerhalb des Getriebegehäuses anzuordnen. Dadurch sind die Anschlüsse für den Motor einfach zugänglich.

Das Gesamtübersetzungsverhältnis des Untersetzungsgetriebes beträgt bis zu 100 : 1. Hierdurch ist gewährleistet, daß ein schnell zu beschleunigender Motor genutzt werden kann, was ebenfalls die Kosten für ein solches Antriebsaggregat herabsetzt. Schließlich ist vorgesehen, daß die Stellbewegung des Stellringes im Drehsinne einen Umfangsweg von weniger als 180 Grad ausmacht. Es ist also nur eine geringe Bewegung erforderlich, so daß die erforderliche Reaktionszeit von der Betätigung des Motors bis zum Ansprechen des Sperrdifferentiales, obwohl ein Untersetzungsgetriebe zwischengeschaltet ist, eingehalten werden kann. Zur Anpassung an die Anforderungen eines Antiblokkiersystems sind geringe Lösezeiten von ca. 100 ms erforderlich. Diese können durch Umpolen des Motors erzielt werden.

Um jedoch eine Rückstellbewegung im Sinne einer Entlastung der Reibanordnung zu gewährleisten, wenn

2

der Motor aufgrund eines Stromausfalls nicht mehr dazu in der Lage ist, ist eine Rückstellung durch eine oder mehrere Rückstellfedern vorgesehen. Die Federn können dabei als Zugfedern ausgebildet sein, wobei zum Beispiel mehrere Zugfedern zwischen Druckring und Stellring angeordnet sind. Es ist jedoch auch möglich, eine oder mehrere Spiralfedern vorzusehen. Diese sind bevorzugt direkt der Motorwelle zugeordnet.

Schließlich ist nach einem weiteren Merkmal der Erfindung vorgesehen, daß der Motor oder die diesem nachgeordnete Untersetzungsstufe des Untersetzungsgetriebes durch einen schaltbaren Freilauf mit der dem Stellring zugeordneten Untersetzungsstufe des Untersetzungsgetriebes verbunden ist, der bei Betätigung des Motors im Sinne einer Druckbeaufschlagung sperrt, und bei Aufhebung der Betätigung zum Ermöglichen des Rücklaufs das Untersetzungsgetriebe vom Motor trennt.

Bei einer solchen Ausbildung kann es sogar genügen, den Motor nur in einer Drehrichtung laufend auszubilden, d.h. nicht umzusteuern und die Rückstellung des Stellringes gegenüber dem Druckring nach Bedarf über die eine drehwirkende Rückstellfeder vorzunehmen.

Da die Druckscheibe relativ zum Differentialkorb stillsteht, ist vorgesehen, den Druckring über ein Axialdrucklager, eine daran anliegende Druckscheibe und an dieser sich abstützende, den Differentialkorb axial durchdringende und an der Druckplatte anliegende Stößel an den Reiblamellen abzustützen. Es wird hierdurch eine weitere Reibungsminderung erreicht und damit ein geringerer Kraftaufwand erforderlich.

Als eine erste Möglichkeit zur Erzielung der Axialbewegung aufgrund der Drehbewegung des stellringes ist in einer Ausgestaltung der Erfindung vorgeschlagen, den Stellring als Scheibe mit stirnseitig in Umdrehungsrichtung ansteigenden Rampenflächen und den Druckring stirnseitig als Folgescheibe mit entsprechenden Nocken auszubilden.

Bevorzugt sind zwei oder mehr, insbesondere drei Nocken und Rampen umfangsverteilt vorgesehen. Um günstige Reibverhältnisse zu erreichen, wird eine Reibpaarung in Bezug auf die Rampenflächen und die Nocken von Stellring und Druckring gewählt, wie sie beispielsweise durch eine Materialpaarung Stahl und Bronze oder Stahl und faserverstärkter Kunststoff gegeben sind.

Als Alternative ist es auch denkbar, den Stellring als Mutter auszubilden und den Druckring mit einem Gewindespindelansatz zu versehen. Auch eine umgekehrte Ausbildung dieser beiden Teile ist möglich.

Als weitere Alternative wird vorgeschlagen, die Drehbewegung in eine Axialbewegung dadurch umzusetzen, daß den zugewandten Stirnflächen von Stellring und Druckring Vertiefungen paarweise gegenüberliegend zugeordnet sind, die gegenläufig in Umfangsrichtung von der tiefsten Stelle zur Stirnfläche ansteigend ausgebildet sind, wobei jeweils ein Paar von Vertiefungen zwischen sich einen Wälzkörper, insbesondere eine Kugel, aufnimmt. Hierdurch können die Reibverhältnisse günstig beeinflußt werden.

Bevorzugt sind über den Umfang, mindestens drei solcher Rillenpaare und damit Wälzkörper vorgesehen. Die tiefste Stelle der Vertiefungen in Verbindung mit der Kugel dient als Rückdrehanschlag zur Begrenzung der Rückstellbewegung des Stellringes gegenüber dem Druckring.

Ein besonders günstig ansprechender und empfindlich regelbarer Drehantrieb ergibt sich daraus, daß Steuerkurven oder -profile an den einander zugewandten Stirnflächen des Druckrings und des Stellrings, die zwischen dem Druckring und dem Stellring in abstützender, den Druckring bei Verdrehung des Stellrings verschiebender Wirkverbindung stehen, eine nicht-lineare Änderungsrate der auf den Druckring wirksamen Axialkomponente über dem Verdrehwinkel des Stellrings aufweisen. Die erfindungsgemäße Wirkung liegt darin, daß während einer ersten Phase der Betätigung durch einen steilen Anstieg der wirksamen Axialkomponenten eine starke Spreizungsrate zwischen Stellring und Druckring bewirkt werden kann, solange aufgrund des Spiels zwischen den Lamellen keine oder keine nennenswerten Reaktionskräfte überwunden werden müssen. Der anfangs steile Anstieg der wirksamen Axialkomponente verbessert somit das Ansprechen der Sperrkupplung. Danach soll der Anstieg der wirksamen Axialkomponente bevorzugt progressiv abfallen, bis der gewünschte Anstieg für den Arbeitsbereich der Sperrwirkung erreicht wird. Der Verlauf der obigen Steigungsänderung kann mathematisch in der Form

$$\frac{dy}{dx} = \frac{a}{x}$$

dargestellt werden. y ist die axial wirksame Höhenveränderung der Kugelrille oder Rampenfläche, x ist der entsprechende Weg in Umfangsrichtung in der Kugelrille oder auf der Rampenfläche. Es ergibt sich ein Profil nach

$$y = a \ln x + b.$$

Es bleibt die Anfangs- und Auslaufanstellwinkel festzulegen. Es ist bei Kugelrillen ein Anfangswinkel von 6-9° und ein Auslaufwinkel von 1-1,5° angemessen. Im Arbeitsbereich ist der vorerwähnte Auslaufwinkel bis zum Ende der Bahn konstant. Damit ist sichergestellt, daß für alle Verschleißzustände die Sperre im Arbeitsbereich nach der gleichen Kennlinie betätigt wird.

Nach einer bevorzugten Ausführung wird ein ringförmiger oder scheibenförmiger Kugelkäfig vorgesehen, der die Kugeln in axialen Durchgangslöchern aufnimmt, damit alle Kugeln in den mit veränderlicher Steigung ausgeführten Kugelrillen synchron laufen.

Nach einer ersten günstigen Ausbildung sind als Steuerkurven Kugelrillen in zumindest einer der Stirnflächen vorgesehen, in denen sich an der gegenüberliegenden Stirnfläche abstützende Kugelkörper laufen. Hierbei ist bei konstantem Radius eine Veränderung der Kugelrillentiefe gemäß den oben beschriebenen unterschiedlichen Raten möglich. Eine zweite günstige Ausgestaltung geht dahin, die Tiefenänderung über dem Kugelrillenverlauf konstant zu halten, die Kugelrillen jedoch mit einer zunehmenden Radialkomponente verlaufen zu lassen, so daß über dem Verdrehwinkel des Stellringes die axiale Verschieberate zunehmend geringer wird. Selbstverständlich ist auch eine Kombination der beiden hier angegebenen Ausgestaltungen möglich. Es können auch zueinander gegenläufige Kugelrillen in beiden Stirnflächen vorgesehen werden. Bevorzugt sind über den Umfang, mindestens drei solcher Rillenpaare und damit Wälzkörper vorgesehen. Die tiefste Stelle der Vertiefungen in Verbindung mit der Kugel dient als Rückdrehanschlag zur Begrenzung der Rückstellbewegung des Stellringes gegenüber dem Druckring.

Nach einer anderen Ausbildung sind als Steuerprofile analog Rampen an zumindest einem der Ringe ausgeführt, die mit entsprechenden Nocken oder radialen Rippen oder ortsfesten Wälzkörpern an dem anderen der Ringe in bevorzgt punktförmigem oder linienförmigen Kontakt stehen.

Insbesondere die genannten Rillen sind auf numerisch gesteuerten Fräsmaschinen problemlos herzustellen. Bei Großserien können Rillen ebenso wie Rampen auch durch Sintern oder Umformen mit entsprechender Genauigkeit ohne Nacharbeit hergestellt werden. Auch hierbei ist der kompliziertere Steuerkurvenverlauf kostenneutral.

Bevorzugte Ausführungsbeispiele und ein Antriebsschema hinsichtlich der Anwendung eines sperrbaren Kegelradausgleichsgetriebes auf ein heckgetriebenes Kraftfahrzeug sind in der Zeichnung schematisch dargestellt.

Es zeigt

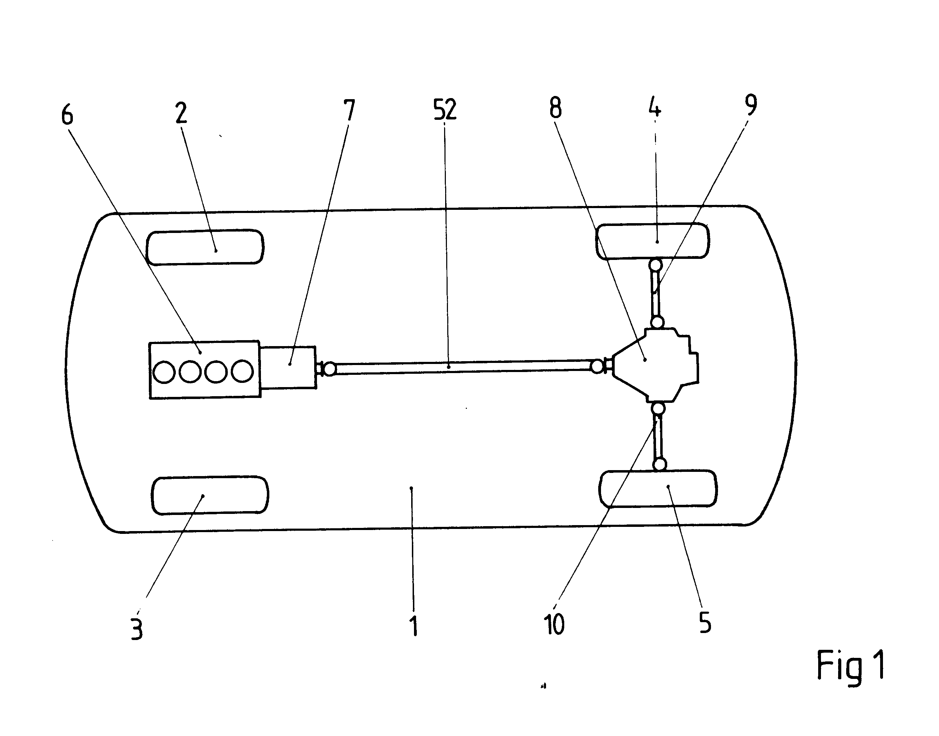

Fig. 1    ein Antriebsschema für ein heckgetriebenes Kraftfahrzeug,
Fig. 2    einen Halbschnitt durch ein erfindungsgemäßes Ausgleichsgetriebe mit einer Nocken- und Nockenfolgescheiben zur Umsetzung der Drehbewegung in eine Axialbewegung,
Fig. 3    eine Explosionsdarstellung der wesentlichen zusammenwirkenden Teile der Ausführungsform nach Fig. 2,
Fig. 4    eine Explosionsdarstellung einer zweiten Ausführungsform mit Rillen und Kugeln zur Umsetzung der Drehbewegung in eine Axialbewegung in Stellung des Druckringes.
Fig. 5    ein Detail der Ausführungsform nach Fig. 4 im Ruhezustand und
Fig. 6    ein Detail der Ausführungsform nach Fig. 4 im gespreizten Zustand zur Beaufschlagung der Reibanordnung.
Fig. 7    das Detail der Ausführungsform gemäß Fig. 5, mit weiteren Einzelheiten,
Fig. 8    ein Druck- oder Stellring in Ansicht in einer ersten Ausführung,
Fig. 9    ein Druck- und Stellring in einer zweiten Ausführung.

Das in der Zeichungsfigur 1 gezeigte Fahrzeug 1 ist ein heckgetriebenes Fahrzeug. Es sind nur die Umrisse zur Verdeutlichung dargestellt. Das Fahrzeug 1 besitzt die beiden Vorderräder 2 und 3 sowie die Hinterräder 4 und 5. Die beiden Hinterräder 4, 5 werden vom Motor 6 über das Schaltgetriebe 7, eine Längswelle 52, das daran angeschlossene extern geregelt sperrbare Kegelradausgleichsgetriebe 8 und die daran angeschlossenen Gelenkwellen 9, 10 angetrieben.

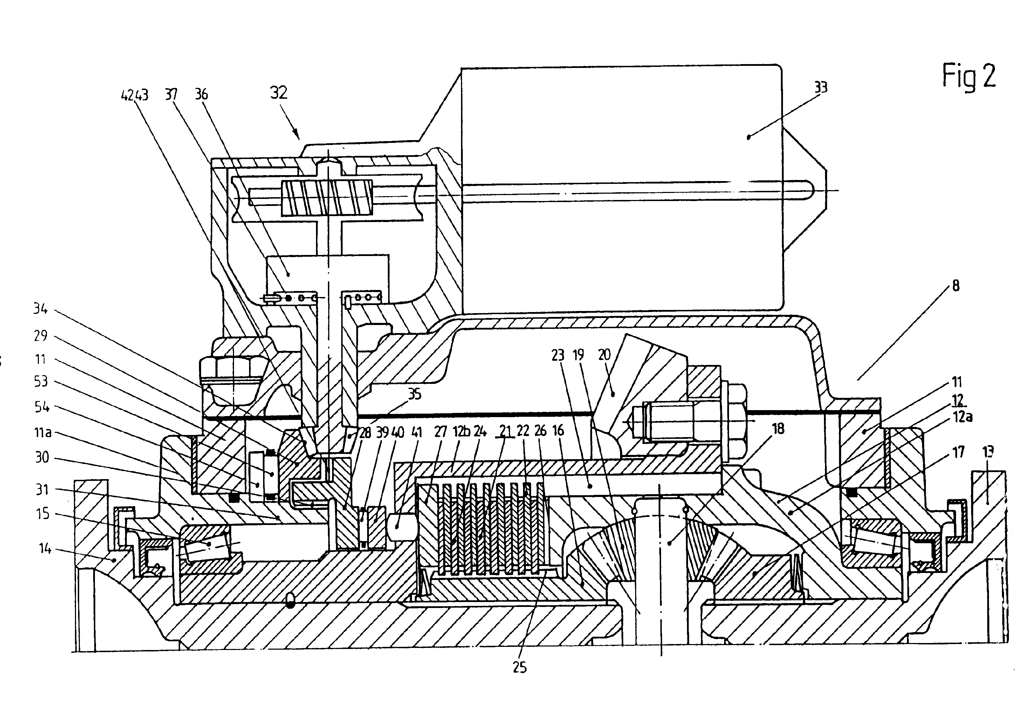

Das extern gesteuert sperrbare Kegelradausgleichsgetriebe 8 ist in Fig. 2 näher dargestellt. In dem Gehäuse 11 und dem damit verbundenen Lagerträger 11a ist über Lager 15 der Differentialkorb 12 drehbar angeordnet. Der Differentialkorb 12 ist geteilt ausgebildet und umfaßt einen ersten Teil 12a, in dem ein erstes Abtriebskegelrad 17 und ein zweites Abtriebskegelrad 16 aufgenommen sind, welche mit auf einem als Bolzen ausgebildeten Träger 18, der im Teil 12a des Differentialkorbes 12 mit diesem drehend angeordnet ist, drehbar gelagerten Ausgleichskegelrädern 19, kämmen. Der zweite Abschnitt 12b des Differentialkorbes 12 ist mit dem ersten Abschnitt 12a drehfest verbunden. Er dient zur Aufnahme einer Reibanordnung 21. Ferner ist an einer Flanschfläche des Differentialkorbteiles 12b das Tellerrad 20 angeschlossen, über welches der Differentialkorb 12 vom Motor 6 des Fahrzeuges 1 antreibbar ist. Die Abtriebskegelräder 16, 17 weisen Bohrungen mit Verzahnungen auf, in welche beispielsweise Steckanschlußwellen 13, 14 eingesteckt sind, die zur Verbindung mit den Antriebswellen 9, 10 für die Hinterräder 4, 5 dienen. Es ist jedoch auch denkbar, daß die zu den Antriebswellen 9, 10 gehörenden Gelenke mit entsprechenden Zapfen ausgerüstet sind, die unmittelbar in die Bohrungen der Abtriebskegelräder 16, 17 einsteckbar sind. Die beiden Abtriebskegelräder 16, 17 sind jeweils drehbar in dem Differentialkorb 12 aufgenommen.

Ferner ist eine Reibanordnung 21 vorgesehen, die aus Außenlamellen 22 und Innenlamellen 24 besteht. Die Innenlamellen 24 besitzen in ihrer Bohrung Verzahnungen, mit denen sie auf einer entsprechenden Außenverzahnung 25 eines Fortsatzes des Abtriebskegelrades 16 drehfest, jedoch verschieblich aufgenommen sind. Die jeweils zwischen zwei Innenlamellen 24 angeordneten Außenlamellen 22 weisen auf ihrem Außenumfang ebenfalls Zähne auf, die in entsprechende Nuten oder Verzahnungen 23, die im Differentialkorb 12 diesen bzw. dessen zweiten Abschnitt 12b angeordnet sind, drehfest eingreifen. Die Außenlamellen 22 sind ebenfalls in Axialrichtung verstellbar. Die Reibanordnung 21 stützt sich zum einen axial an der Stützfläche 26, die Bestandteil des ersten Teiles 12a des Differentialkorbes 12 ist, ab, zum anderen ist die Reibanordnung 21 über eine Druckplatte 27 druckbeaufschlagbar. Es sind den zweiten Abschnitt 12b des Differentialkorbes 12 durchdringende Stößel 41 vorgesehen, an denen eine außerhalb des Differentialkorbes 12 angeordnete Druckscheibe 40 anliegt.

Im Bereich der Anordnung der Stößel 41 ist der zweite Teile 12b des Differentialkorbs mit einer radial gerichteten Fläche versehen.

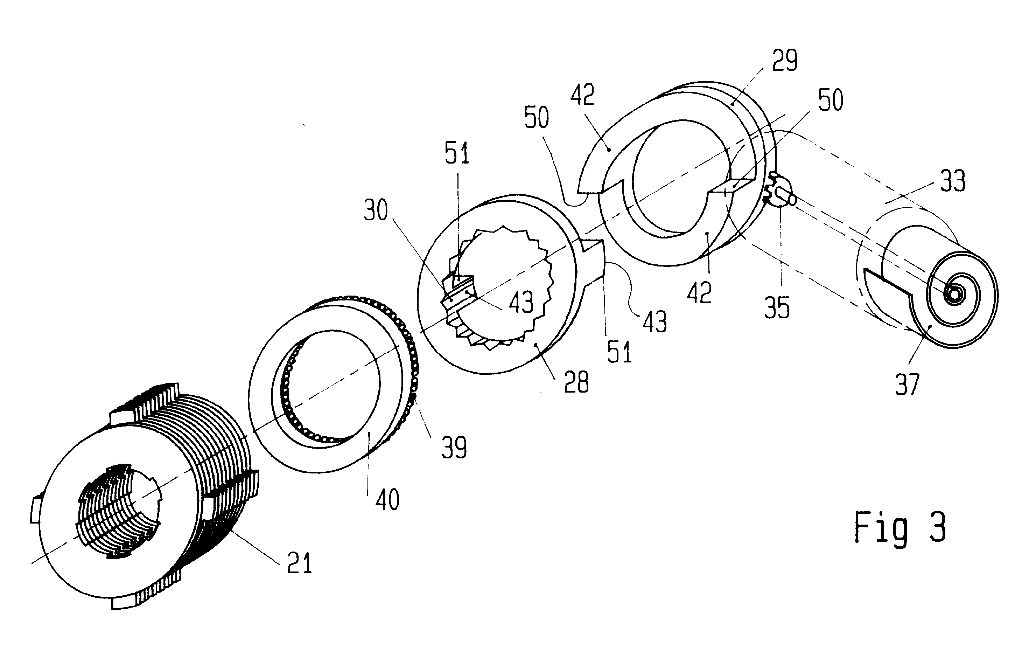

Die Beaufschlagung der Reibanordnung 21 zur Abbremsung des Abtriebkegelrades 16 gegenüber dem Differentialkorb 12 ist nachfolgend beschrieben, und zwar zunächst unter Bezugnahme auf die Figuren 2 und 3. Im Lagerträger 11a des Gehäuses 11 ist drehfest, aber axial verschiebbar auf einem Lagerträgeransatz 31 ein Druckring 28 angeordnet. Der Lagerträgeransatz 31 ist hierzu mit einer Keilverzahnung 30 versehen, auf welcher der Druckring 28 mit in einer Bohrung seines Ansatzes angebrachten, entsprechenden Zähnen 30 geführt ist. Hierdurch wird eine drehfeste Verbindung des Druckringes 28 zum Träger 11a des Gehäuses 11 erreicht, wobei jedoch aufgrund der Verzahnung 30 eine Axialverschiebung in Richtung auf die Reibanordnung 21 möglich ist. Zwischen einer Radialfläche des Druckringes 28 und der Druckplatte 40 ist ein Axialdrucklager 39 eingebaut. Hierdurch wird die Reibung verringert, da die Druckplatte 40 mit dem Differentialkorb 12 umläuft.

Auf dem Lagerträgeransatz 31 ist ferner ein Stellring 29 drehbar, aber axial unverschieblich angeordnet. Der Stellring 29 stützt sich gegen ein Axiallager bestehend aus den Wälzkörpern 53 und dem Stützring 54 ab. Stellring 29 und Druckring 28 weisen radial verlaufende Stirnbereiche auf, die einander gegenüberliegen. Bei dem in den Figuren 2 und 3 dargestellten Beispiel besitzt der Stellring 29 auf seiner dem Druckring 28 zugewandten Stirnfläche mindestens zwei umfangsverteilt angeordnete und ansteigend verlaufende Rampenflächen 42 auf. Der Druckring 28 besitzt zwei Nocken 43, welche sich auf den Rampenflächen 42 abstützen. Im Ausgangszustand, wenn die Reibanordnung 21 nicht durch eine Axialkraft beaufschlagt ist, also bei im offenen Zustand arbeitenden Kegelradausgleichsgetriebe 8, befinden sich Stellring 29 und Druckring 28 in der zueinander nächstmöglichen Position. Dabei liegt die Rückdrehanschlagfläche 51 des Druckringes 28 an der entsprechenden Rückdrehfläche 50, die zur Rampenfläche 42 gehört, an. Bei Verdrehung des Stellringes 29 gleitet die Rampenfläche 42 relativ zur Nockenfläche 43 und verschiebt den Druckring 28 in Richtung auf die Reibanordnung 21, die zu einer vorbestimmten Sperrung und damit Ankupplung der Bewegung des Abtriebkegelrades 16 an die Drehbewegung des Differentialkorbes 12 führt.

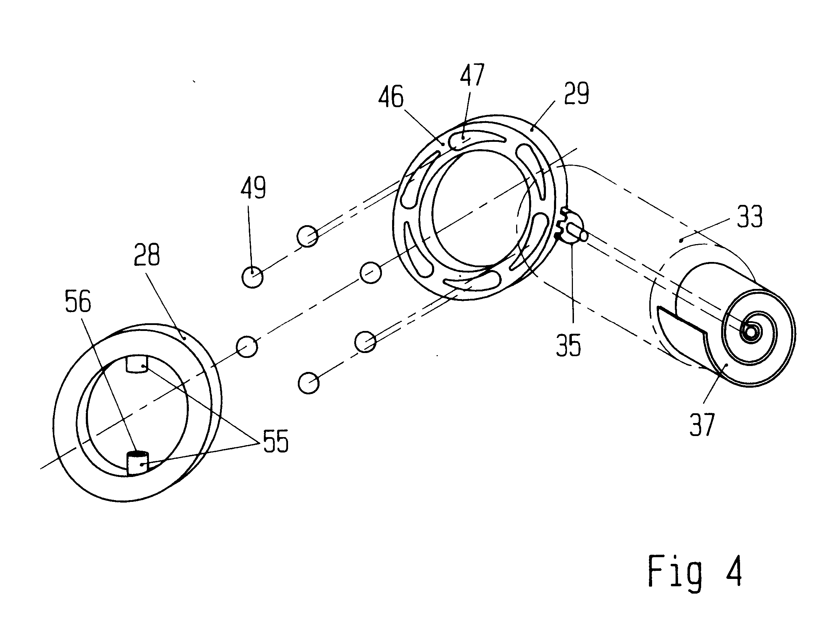

Zur Erzielung der Drehbewegung ist der Stellring 29 in seinem radial äußeren Abschnitt mit einer Kegelradverzahnung 34 versehen, in die ein Ritzel 35 eingreift. Das Ritzel 35 ist über einen Freilauf 36 mit der vom Motor 33, der als Elektromotor ausgebildet ist, aus gesehen ersten Übersetzungsstufe verbunden. Ferner ist zwischen dem Gehäuse 11 und der zum Ritzel 35 gehörenden Welle, die durch das Gehäuse 11 nach außen geführt ist, eine Rückstellfeder 37 angeordnet, die als Spiralfeder ausgebildet ist (Fig. 2). Sie kann auch bei reversierbaren Untersetzungsgetrieben an der Motorwelle angreifen (Fig. 3 und 4). Die Rückstellfeder 37 sorgt dafür, daß für den Fall, daß der Motor 33 aus irgendwelchen Gründen nicht mit Energie versorgt werden kann und nicht in der Lage ist, den Stellring 29 zurückzudrehen, eine Rückdrehung aufgrund der Federkraft erreicht wird. Im übrigen kann es aufgrund der Anordnung des Freilaufes 36 überflüssig sein, überhaupt einen in beiden Drehrichtungen betätigbaren Motor 33 vorzusehen, wenn ein schaltbarer Freilauf 36 vorgesehen ist, der nur in Beaufschlagungsrichtung, bei Verdrehung des Stellringes 29 zur Axialverstellung des Druckringes 28 in Richtung auf die Reibanordnung 21 sperrt und dann, wenn vom Motor 33 kein Moment auf das Ritzel im Sinne des Haltens in der Sperrstellung ausgeübt wird, eine Freigangsstellung und damit eine Abkupplung des Motors 33 vom Ritzel 35 bewirkt, so daß die Rückstellung ermöglicht wird. Gegebenenfalls kann sogar die Rückstellfeder entfallen, so daß die drehenden Massen des Motors 33 nicht mitzubewegen sind.

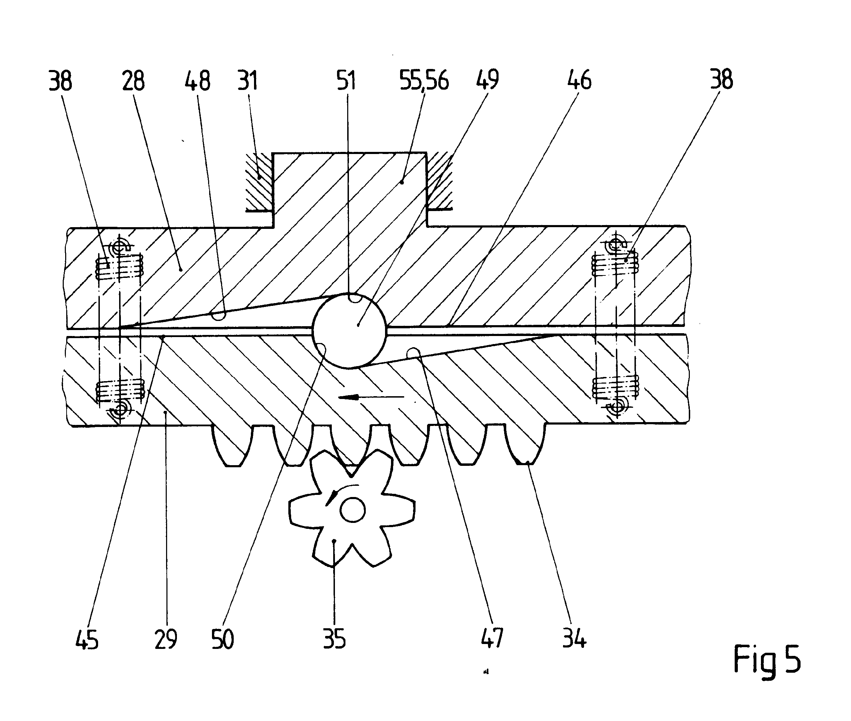

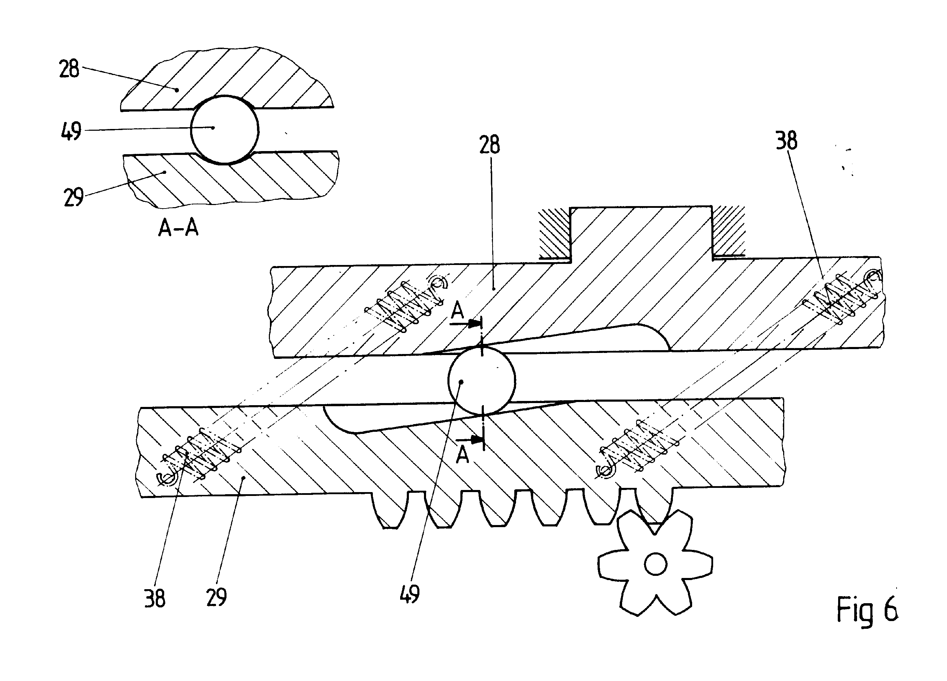

In den Figuren 4 bis 7 ist ein Detail für eine bevorzugte alternative Betätigungsmöglichkeit dargestellt. Der Stellring 29 besitzt in seiner Stirnfläche 45 umfangsverteilt mehrere Kugelrillen 47, welche ausgehend von der tiefsten Stelle, die als Rückdrehanschlagfläche 50 ausgebildet ist, zur Stirnfläche 45 hin ansteigend verläuft. Die Kugelrillen 47 verlaufen jeweils dabei in einem Kreisbogen. Der Kugelrille 47 ist gegenüberliegend in der Stirnfläche 46 des Druckringes 28 eine Kugelrille 48 angeordnet, die ebenfalls ausgehend von einer tiefsten Stelle, die als Rückdrehanschlag 51 gedacht ist, in Richtung auf die Stirnfläche 46 ansteigend verläuft. Der Verlauf der beiden Kugelrillen 47 und 48 ist jedoch einander entgegengerichtet. In jeweils zwei Kugelrillen 47, 48, die paarweise gegenüberliegend angeordnet sind, ist jeweils ein Wälzkörper in Form einer Kugel 49 aufgenommen. Bei Verdrehung des Stellringes 29 zum Druckring 28 bewegt sich die Kugel 49 in den Kugelrillen 47, 48, wobei die in Fig. 6 dargestellte Position eingenommen wird. Dabei findet durch die Kugel 49 eine Spreizung statt, so daß sich der Druckring 28 vom Stellring 29 entfernt. Ferner ist, wie aus den Figuren 5 und 6 ersichtlich, vorgesehen, zwischen Stellring 29 und Druckring 28 Zugfedern 38 als Rückstellfedern anzuordnen. In Figur 6 ist die gespannte Lage der Rückstellfedern 38 erkennbar. Es sind bevorzugt mehrere Zugfedern auf dem Umfang verteilt angeordnet. Ebenso sind mehrere Rillenpaare 47, 48 und Kugeln 49 auf dem Umfang verteilt vorgesehen. Zur reibarmen Führung des Druckringes 28 sind radial sich erstreckende Rollen 55 auf Zapfen 56 angeordnet, die in entsprechenden Nuten des Lagerträgeransatzes 31 geführt sind.

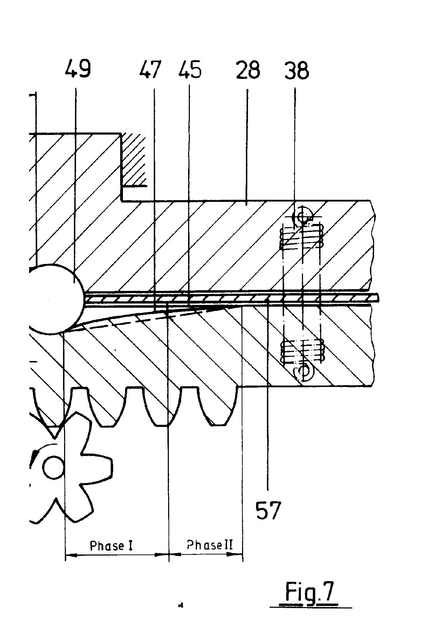

In Fig. 7 ist unter Verwendung der gleichen Bezugsziffern im wesentlichen ein mit der Darstellung nach Fig. 5 übereinstimmendes Detail dargestellt. Die Kugelrillen 47, 48 weisen hier jedoch eine veränderliche Steigung bezüglich der Tiefe auf, wobei ausgehend vom dargestellten unverdrehten Zustand der Druckscheibe 28 und der Stellscheibe 29 eine Phase I mit veränderlicher Steigung, nämlich einem steilen Anstieg mit einer hohen Spreizungsrate über dem Drehwinkel, jedoch mit kontinuierlich abnehmender Steigung und damit abnehmender Spreizungsrate über dem Verdrehwinkel, und anschließend eine Phase II mit konstanter Spreizungsrate erkennbar sind, die für die Spreizung unter Last gewünscht ist. Diese konstante Steigung ist erforderlich, um unterschiedliche Last- und Verschleißzustände abzudecken. Zwischen Druckscheibe 28 und Stellscheibe 29 ist ein Kugelkäfig 57 dargestellt, der die Kugeln mit gleichem Umfangsabstand hält und sie zwingt, synchron zu laufen, was insbesondere in Phase I von besonderer Bedeutung ist.

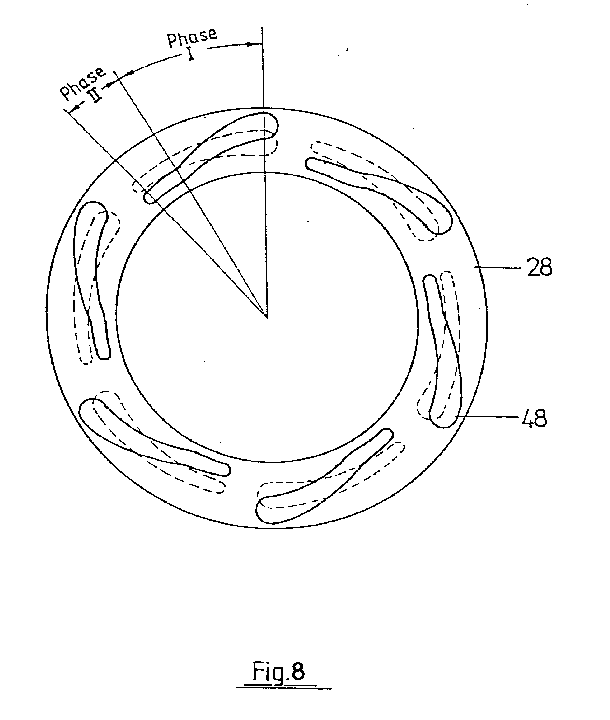

In Fig. 8 ist der Druckring 28 in Ansicht dargestellt, wobeinach einer alternativen oder ergänzenden Weiterbildung sechs Kugelrillen 48 über den Umfang verteilt erkennbar sind, die bei untereinander gleichen oder unterschiedlichen Steigungsraten hinsichtlich der Tiefe außerdem einen Bereich haben, der eine Radialkomponente im Bahnverlauf aufweist, so daß die Spreizungsrate über dem Verdrehwinkel hier verringert ist.

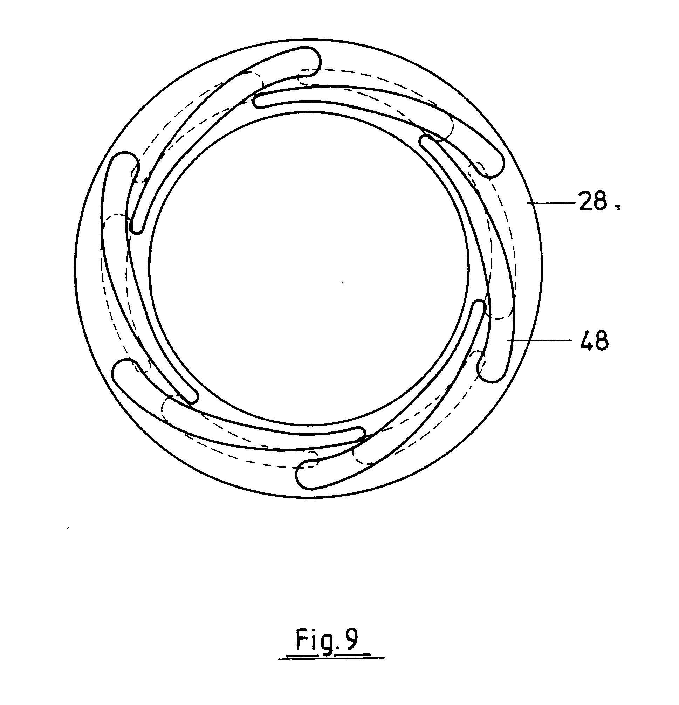

In Fig. 9 ist im wesentlichen die gleiche Darstellung des Druckrings 28 wie in Fig. 8 zu finden, wobei jedoch hier in Folge der radialen Komponente der Kugelrillen 48 im Bereich der Phase II von der Möglichkeit Gebrauch gemacht wurde, die Rillen sich in Umfangsrichtung überdecken zu lassen. Aufgrund des größeren möglichen Verdrehwinkels kann eine geringere Steigungsrate in der Tiefe und damit ein empfindlicheres Ansprechverhalten erzeugt werden.

## Patentansprüche

1. Ausgleichsgetriebe (8) mit extern veränderlich steuerbarer Sperrkupplung, insbesondere für kraftfahrzeuge, mit einem in einem Gehäuse (11) drehbar gelagerten und antreibbaren Differentialträger (12), mit diesem koaxial angeordneten und drehbar gekoppelten, jeweils mit einer Abtriebswelle (16, 17) drehfest verbindbaren Abtriebsrädern (16, 17), mit diesen gleichzeitig in Eingriff befindlichen im Differentialträger (12); drehbar gehaltenen Ausgleichsrädern (19) und einer Reibanordnung (21), die abwechselnd drehfest mit einem ersten der koaxial liegenden Teile — Differentialträger (12) und Abtriebsräder (16, 17) — verbundene Außenlamellen (22) und drehfest mit einem anderen der koaxial liegenden Teile — Differentialträger (12) und Abtriebsräder (16, 17) — verbundene Innenlamellen (24) gegebenenfalls unter Zwischenschaltung frei drehender Zwischenscheiben umfaßt, wobei diese einerseits an einer Stützfläche (26) des ersten der Teile — Differentialträger (12) oder eines der Abtriebsräder (16, 17) — axial abgestützt sind und andererseits über eine Betätigungseinrichtung und eine Druckplatte (27) beaufschlagbar sind, dadurch gekennzeichnet, daß die Betätigungseinrichtung einen zum Gehäuse (11) drehfesten, aber axial auf die Reibanordnung (21) zu verschiebbaren Druckring (28), einen dazu relativ verdrehbaren, axial aber unverschieblich gehaltenen, den Druckring (28) verschiebenden Stellring (29) und einen diesen bedarfsweise antreibenden Drehantrieb (32) umfaßt.

2. Ausgleichsgetriebe nach Anspruch 1, dadurch gekennzeichnet, daß der Drehantrieb (32) ein Untersetzungsgetriebe (34, 35) und einen Motor (31) aufweist.

3. Ausgleichsgetriebe nach Anspruch 2, dadurch gekennzeichnet, daß zur Bildung einer Stufe des Untersetzungsgetriebes der Stellring (29) an seinem radial äußeren Abschnitt mit einer Verzahnung (34) versehen ist, mit der ein Zahnritzel (35) kämmt.

4. Ausgleichsgetriebe nach einem der Ansprüche 1 bis 3, dadurch gekennzeichnet, daß der Stellring (29) über einen Umfangsweg von weniger als 180 Grad verdrehbar ist.

5. Ausgleichsgetriebe nach einem der Ansprüche 1 bis 4, dadurch gekennzeichnet, daß der dem Drehantrieb (32) zugehörige Motor (33) ein Elektromotor ist.

6. Ausgleichsgetriebe nach einem der Ansprüche 1 bis 5, dadurch gekennzeichnet, daß der Motor (33) oder

EP 0 340 451 B1

die diesem nachgeordnete Untersetzungsstufe des Untersetzungsgetriebes durch einen schaltbaren Freilauf (36) mit der dem Stellring (29) zugeordnete Untersetzungsstufe (34, 35) des Getriebes verbunden ist, der bei Betätigung des Motors (33) im Sinne einer Druckbeaufschlagung für die Reibanordnung (21) sperrt und bei Aufhebung der Betätigung im Sinne eines Rücklaufs des Stellrings (29) das Untersetzungsgetriebe (34, 35) vom Motor (33) trennt.

7. Ausgleichsgetriebe nach einem der Ansprüche 1 bis 6, dadurch gekennzeichnet, daß mindestens eine den Stellring (29) gegenüber dem Druckring (28) in die Ausgangsposition zurückdrehende Rückstellfeder (37) vorgesehen ist.

8. Ausgleichsgetriebe nach einem der Ansprüche 1 bis 7, dadurch gekennzeichnet, daß der Druckring (28) über ein Axialdrucklager (39), eine daran anliegende Druckscheibe (40) und an dieser sich abstützende, den Differentialkorb (12) axial durchdringende und an der Druckplatte (27) der Reibanordnung (21) anliegende Stößel (41) an den Reiblamellen (22, 24) abgestützt ist.

9. Ausgleichsgetriebe nach einem der Ansprüche 1 bis 8, dadurch gekennzeichnet, daß einer der Ringe (28, 29) als Nockenscheibe mit stirnseitigen in Umdrehungsrichtung ansteigenden Rampenflächen (42) und der andere der Ringe (29, 28) stirnseitig als Folgescheibe mit entsprechenden Nocken (43) ausgebildet ist.

10. Ausgleichsgetriebe nach einem der Ansprüche 1 bis 8, dadurch gekennzeichnet, daß den zugewandten Stirnflächen (45, 46) von Stellring (29) und Druckring (28) Vertiefungen (47, 48) paarweise gegenüberliegend zugeordnet sind, die gegenläufig in Umfangsrichtung von der tiefsten Stelle zur Stirnfläche (45, 46) ansteigend ausgebildet sind, wobei jeweils ein Paar von Vertiefungen (47, 48) zwischen sich einen Wälzkörper, insbesondere eine Kugel (49), aufnimmt.

11. Ausgleichsgetriebe nach Anspruch 9 oder 10, dadurch gekennzeichnet, daß Steuerkurven oder -profile an den einander zugewandten Stirnflächen (45, 46) des Druckrings (28) und des Stellrings (29), die zwischen dem Druckring und dem Stellring in abstützender, den Druckring (28) bei Verdrehung des Stellrings (29) verschiebender Wirkverbindung stehen, eine nicht-lineare Änderungsrate der auf den Druckring (28) wirksamen Axialkomponente über dem Verdrehwinkel des Stellrings (29) aufweisen.

12. Ausgleichsgetriebe nach Anspruch 11, dadurch gekennzeichnet, daß die Steuerkurven oder -profile eine zunächst starke und dann geringere axiale Änderungsrate der auf den Druckring (28) wirksamen Axialkomponente über dem Verdrehwinkel des Stellrings (29) aufweisen.

13. Ausgleichsgetriebe nach einem der Ansprüche 1 bis 12, dadurch gekennzeichnet, daß die Steuerkurven oder -profile aus zumindest in einem der Ringe (28, 29) im wesentlichen in Umfangsrichtung verlaufenden Kugelrillen (47, 48) veränderlicher Tiefe und darin geführten an dem jeweils zweiten Ring anliegenden Kugeln (49) bestehen.

14. Ausgleichsgetriebe nach einem der Ansprüche 1 bis 13, dadurch gekennzeichnet, daß die Kugelrillen (47, 48) zur Variation der axialen Änderungsrate eine über den Umfang mit unterschiedlicher Steigung veränderliche Tiefe haben.

15. Ausgleichsgetriebe nach einem der Ansprüche 1 bis 14, dadurch gekennzeichnet, daß die Kugelrillen (47, 48) zur Variation der axialen Änderungsrate eine über dem Umfang veränderliche radiale Richtungskomponente haben.

16. Ausgleichsgetriebe nach einem der Ansprüche 1 bis 15, dadurch gekennzeichnet, daß sich mehrere gleichartige Kugelrillen (47, 48) in Umfangsrichtung auf unterschiedlichem Radius der Stirnflächen (45, 46) überdecken.

17. Ausgleichsgetriebe nach einem der Ansprüche 1 bis 16, dadurch gekennzeichnet, daß ein Kugelkäfig (57) zwischen Stellring (29) und Druckring (28) vorgesehen ist, der die Kugeln (49) in gleichem Umfangsabstand zueinander hält.

## Claims

1. A differential drive (8) with an externally variably controllable locking coupling, especially for motor vehicles, having a drivable differential carrier (12) rotatably supported in a housing (11) ; output gears (16, 17) coaxially arranged and rotatably coupled therewith and each being non-rotatingly connectable to an output shaft (16, 17) ; differential gears (19) simultaneously engaging the output gears (16, 17) and rotatably held in the differential carrier (12) ; and a friction assembly (21) which alternately comprises outer places (22) non-rotatingly connected to one of the coaxially positioned parcs — differential carrier (12) and output gears (16, 17) — and inner plates (24) non-rotatingly connected to another of the coaxially positioned parts — differencial carrier (12) and output gears (16, 17) —, possibly with freely rotating intermediate plates arranged therebetween, with said intermediate plates on the one hand being axially supported on a supporting face (26) of the one part — differential carrier (12) or one of the output gears (16, 17) — and on the other hand being loadable via an actuating

7

device and a pressure plate (17), characterised in that the actuating device comprises a pressure ring (28) which is non-rotatable relative to the housing (11), but axially movable in the direction of the friction assembly (21) ; a setting ring (29) which is rotatable relative to the said pressure ring (28), but is held so as to be axially unmovable and moves the pressure ring (28) ; and a rotary drive (32) which drives the said setting ring (29) when required.

2. A differential drive according to claim 1, characterised in that the rotary drive (32) comprises a reduction gear (34, 35) and a motor (31).

3. A differential drive according to claim 2, characterised in that for the purpose of forming a reduction gear stage, the setting ring (29), at its radially outer portion, is provided with teeth (34) engaged by a toothed pinion (35).

4. A differential drive according to one of claims 1 to 3, characterised in that the setting ring (29) is rotatable via a circumferential path of less than 180 degrees.

5. A differencial drive according to one of claims 1 to 4, characterised in that the motor (33) associated with the rotary drive (32) is an electric motor.

6. A differential drive according to one of claims 1 to 5, characterised in that the motor (33) or the adjoining reduction stage of the reduction gear is connected to the reduction stage (34, 35) of the drive associated with the setting ring (29) by a switchable freewheeling unit (36) which, upon actuation of the motor (33) in the sense of applying pressure to the friction assembly (21), has a locking effect and which, upon cancelling such actuation in the sense of a return movement of the setting ring (29), separates the reduction gear (34, 35) from the motor (33).

7. A differential drive according to one of claims 1 to 6, characterised in that there is provided at least one return spring (37) turning the setting ring (29) back into the starting position relative to the pressure ring (28).

8. A differential drive according to one of claims 1 to 7, characterised in that the pressure ring (28) is supported on the friction plates (22, 24) via an axial pressure bearing (39), via a pressure place (40) resting thereon and via tappets (41) supported on the said pressure plate (40), axially passing through the differential carrier (12) and resting against the pressure plate (27) of the friction assembly (21).

9. A differential drive according to one of claims 1 to 8, characterised in that one of the rings (28, 29) is designed as a cam disc with ramp faces (42) provided at its end face and rising in the direction of rotation and that the other ring (29, 28), at its end face, is designed as a follow-up disc with corresponding cams.

10. A differential drive according to one of claims 1 to 8, characterised in that end faces (45, 46) of the setting ring (29) and the pressure ring (28) facing each other are provided with indentations (47, 48) which are arranged opposite each other in pairs and which are designed to rise in opposite directions in the circumferential direction from the lowest point to the end face (45, 46), with each pair of indentations (47, 48) accommodating a rolling member, especially a ball (49), therebetween.

11. A differential drive according to claim 9 or 10, characterised in that control curves or control profiles at the end faces (45, 46) of the pressure ring (28) and setting ring (29) which face each other and which have established a supporting operating connection between the pressure ring and the setting ring as a result of which the pressure ring (28) is moved upon rotation of the setting ring (29), feature a non-linear rate of change of the axial component acting on the pressure ring (28), as a function of the angle of rotation of the setting ring (29).

12. A differential drive according to claim 11, characterised in that the control curves or control profiles, as a function of the angle of rotation of the setting ring (29), feature an initially high and then slight axial rate of change of the axial component acting on the pressure ring (28).

13. A differential drive according to one of claims 1 to 12, characterised in that the control curves or control profiles consist of ball grooves (47, 48) of variable depth extending at least in one of the rings (28, 29) substantially in the circumferential direction and of balls (49) guided therein and each resting against the second ring.

14. A differential drive according to one of claims 1 to 13, characterised in that for the purpose of varying the axial rate of change, the depth of the ball grooves (47, 48) varies across the circumference with different gradients.

15. A differential drive according to one of claims 1 to 14, characterised in that for the purpose of varying the axial rate of change, the radial directional component of the ball grooves (47, 48) varies across the circumference.

16. A differential drive according to one of claims 1 to 15, characterised in that several identical ball grooves (47, 48) overlap each ocher in the circumferential direction or different radii of the end faces (45, 46).

17. A differential drive according to one of claims 1 to 16, characterised in that between the setting ring (29) and the pressure ring (28) there has been provided a ball cage (57) which holds the balls (49) at the same circumferential distance from one another.

## Revendications

1. Mécanisme différentiel (8) muni d'un embrayage de blocage à commande extérieure variable, en particulier pour véhicules automobiles, comprenant un boîtier de différentiel (12) monté rotatif dans un carter (11) et pouvant être entraîné, des roues de sortie (16, 17) disposées coaxialement et accouplées en rotation à ce boîtier, qui peuvent être reliées solidairement en rotation chacune à un arbre de sortie (16, 17), des roues de différentiel (19) tenues mobiles en rotation dans le boîtier de différentiel (12), et qui sont en même temps en prise avec ces roues de sortie, et un dispositif à friction (21) qui comprend en alternance des disques extérieurs (22), reliés solidairement en rotation à une première des parties disposées coaxialement — le boîtier de différentiel (12) et les roues de sortie (16, 17) — et des disques intérieurs (24) reliés solidairement en rotation à l'autre des parties coaxiales — le boîtier de différentiel (12) et les roues de sortie (16, 17) — éventuellement avec interposition de disques intermédiaires tournant librement, ces disques étant, d'une part, appuyés contre une surface d'appui (26) de la première des parties — le boîtier de différentiel (12) ou l'une des roues de sortie (16, 17) — et pouvant, d'autre part, être attaqués par l'intermédiaire d'un dispositif d'actionnement et d'un plateau de pression (27), caractérisé en ce que le dispositif d'actionnement comprend une couronne de pression (28) solidaire du carter (11) en rotation mais qui peut se rapprocher axialement du dispositif de friction (21), une couronne de commande (29), mobile en rotation mais maintenue immobilisée en translation axiale par rapport à la couronne de pression (28), et qui déplace la couronne de pression (28), et un entraînement rotatif (32) qui entraîne cette couronne de commande en cas de besoin.

2. Mécanisme différentiel selon la revendication 1, caractérisé en ce que l'entraînement rotatif (2) comprend un mécanisme réducteur (34, 35) et un moteur (31).

3. Mécanisme différentiel selon la revendication 2, caractérisé en ce que, pour former un étage du mécanisme réducteur, la couronne de commande (29) est munie, sur sa partie radialement extérieure, d'une denture (34) avec laquelle engrène un pignon (35).

4. Mécanisme différentiel selon une des revendications 1 à 3, caractérisé en ce que la couronne de commande (29) peut tourner sur une course circonférentielle de moins de 180°.

5. Mécanisme différentiel selon une des revendications 1 à 4, caractérisé en ce que le moteur (33) appartenant à l'entraînement rotatif (32) est un moteur électrique.

6. Mécanisme différentiel selon une des revendications 1 à 5, caractérisé en ce que le moteur (33) ou l'étage de réduction du mécanisme réducteur qui est placé en aval de ce moteur est relié à l'étage de réduction (34, 35) du mécanisme réducteur associé à la couronne de commande (39) par une roue libre commandée (36) qui bloque lorsque le moteur (33) est actionné dans le sens de la sollicitation de pression du dispositif de friction (21) et désolidarise le mécanisme réducteur (34, 35) du moteur (33) lors de la suppression de l'actionnement pour permettre le mouvement de retour de la couronne de commande (29).

7. Mécanisme différentiel selon une des revendications 1 à 6, caractérisé en ce qu'il est prévu au moins un ressort de rappel (37) qui fait tourner la couronne de commande (29) en marche arrière par rapport à la couronne de pression (28) pour la ramener à sa position de départ.

8. Mécanisme différentiel selon une des revendications 1 à 7, caractérisé en ce que la couronne de pression (28) prend appui contre les disques de friction (22, 24) par l'intermédiaire d'un palier de pression axial (39), d'un disque de pression (40) appuyé contre ce palier et de poussoirs (41) qui prennent appui sur ce disque de pression, traversent axialement le boîtier (12) du différentiel et sont appuyés contre le plateau de pression (27) du dispositif de friction (21).

9. Mécanisme différentiel selon une des revendications 1 à 8, caracterisé en ce qu'une des couronnes (28, 29) est réalisée sous la forme d'un disque porte-cames muni de surfaces de rampes (42) prévues sur la surface frontale, qui sont en pente montante dans le sens de la rotation, tandis que l'autre des couronnes (29, 28) est configurée, sur sa surface frontale, sous la forme d'un disque de contre-came portant des bossages de cames (43) correspondants.

10. Mécanisme différentiel selon une des revendications 1 à 8, caractérisé en ce qu'aux surfaces frontales (45, 46) de la couronne de commande (29) et de la couronne de pression (28) qui sont dirigées l'une vers l'autre, sont associés des évidements (47, 48) qui sont opposés par paires et qui s'étendent en pente montante les uns en sens inverse des autres dans la direction circonférentielle, du point le plus profond jusqu'à la surface frontale (45, 46), deux évidements (47, 48) qui forment une paire recevant entre eux un corps roulant, notamment une bille (49).

11. Mécanisme différentiel selon la revendication 9 ou 10, caractérisé en ce que des courbes ou profils de commande situés sur les surfaces frontales en regard (45, 46) de la couronne de pression (28) et de la couronne de commande (29) qui sont en liaison active, d'appui et de translation de la couronne de pression (28) en réponse à la rotation de la couronne de commande (29) entre la couronne de pression et la couronne de commande présentent un taux de variation non linéaire de la composante axiale agissant sur la couronne de pression (28) en fonction de l'angle de rotation de la couronne de commande (29).

12. Mécanisme différentiel selon la revendication 11, caractérisé en ce que les courbes et profils de commande présentent un taux de variation axiale tout d'abord fort puis plus faible de la composante axiale agissant sur la couronne de pression (28) par unité d'angle de rotation de la couronne de commande (29).

13. Mécanisme différentiel selon une des revendications 1 à 12, caractérisé en ce que les courbes ou profils de commande sont composés de rainures de bille (47, 48) de profondeur variable, s'étendant sensiblement dans la direction circonférentielle, dans au moins une des couronnes (28, 29), et deux billes (49) guidées dans ces rainures et qui sont appuyées contre la deuxième des couronnes.

14. Mécanisme différentiel selon une des revendications 1 à 13, caractérisé en ce que, pour faire varier le taux de variation axiale, les rainures de billes (47, 48) ont une profondeur qui varie sur la circonférence avec une pente différente.

15. Mécanisme différentiel selon une des revendications 1 à 14, caractérisé en ce que, pour assurer la variation du taux de variation axiale, les rainures de billes (47, 48), ont une composante de direction radiale qui varie sur la circonférence.

16. Mécanisme différentiel selon une des revendications 1 à 15, caractérisé en ce que plusieurs rainures de billes (47, 48) de même type se recouvrent mutuellement dans la direction circonférentielle, à des rayons différents des surfaces frontales (45, 46).

17. Mécanisme différentiel selon une des revendications 1 à 16, caractérisé en ce qu'il est prévu entre la couronne de commande (29) et la couronne de pression (28) une cage à billes (57) qui maintient les billes (49) à un espacement circonférentiel mutuel constant.

Fig 1

Fig 2

Fig 3

Fig 4

Fig 5

38  28  48  31  51  55,56  49  46  38

45  29  50  35  47  34

EP 0 340 451 B1

15

EP 0 340 451 B1

A–A

Fig 6

49   47  45   28   38

57

Phase I    Phase II

Fig.7

EP 0 340 451 B1

Fig.8

Fig. 9